# EUROPÄISCHE PATENTSCHRIFT

(11) **EP 2 583 870 B1**
(45) Veröffentlichungstag und Bekanntmachung des Hinweises auf die Patenterteilung: **12.08.2015**
(21) Anmeldenummer: 12004728.7
(22) Anmeldetag: 25.06.2012
(51) Int. Cl.: B60R 21/38, B60R 22/195, F15B 15/14, F15B 15/19

(54) **Kolben-Zylinder-Einheit und Fahrzeugintegrierbares Personensicherheitssystem mit einer solchen Kolben-Zylinder-Einheit**
Piston-cylinder unit and personal safety system with such a piston-cylinder unit integrated into the vehicle
Unité piston-cylindre et système de sécurité des personnes pouvant être intégré dans un véhicule équipé d'une telle unité piston-cylindre

(30) Priorität: 21.10.2011 DE 102011116590
(43) Veröffentlichungstag der Anmeldung: 24.04.2013
(73) Patentinhaber: TRW Airbag Systems GmbH, 84544 Aschau am Inn (DE)
(72) Erfinder: Seidl, Johann, 84513 Töging (DE); Sedlmeier, Martin, 84137 Vilsbiburg (DE); Neumayer, Hans-Peter, 84539 Ampfing (DE); Bommer, Johannes, 84570 Polling (DE); Leitl, Josef, 84562 Mettenheim (DE)
(74) Vertreter: Mehnert, Bernhard

(56) Entgegenhaltungen:
- EP-A1- 2 187 065
- WO-A1-2008/026423
- US-A1- 2002 074 787
- US-A1- 2009 266 638

## Beschreibung

Die Erfindung betrifft eine Kolben-Zylinder-Einheit nach dem Oberbegriff des Patentanspruchs 1. Außerdem betrifft die Erfindung ein fahrzeugintegrierbares Personensicherheitssystem mit einer solchen Kolben-Zylinder-Einheit als Antriebseinheit.

Kolben-Zylinder-Einheiten werden in vielen Bereichen der Fahrzeugsicherheitstechnik eingesetzt. Ein Einsatzgebiet sind beispielsweise Systeme zur aktiven Verbesserung der Sicherheit von Passanten, wie z. B. Fußgängern oder Radfahrern. In diesem Zusammenhang wird eine Kolben-Zylinder-Einheit verwendet, um den Aufprall eines Passanten auf die Motorhaube eines Fahrzeugs zu dämpfen, indem der mögliche Deformationsweg der Motorhaube erhöht wird. Zu diesem Zweck wird kurz vor dem Aufprall des Passanten die Motorhaube des Fahrzeugs um eine definierte Wegstrecke angehoben, was durch eine Kolben-Zylinder-Einheit erfolgen kann. Außerdem werden Kolben-Zylinder-Einheiten bei Gurtstraffern eingesetzt. Sie dienen dazu, die Vorverlagerung der Insassen durch eine Straffung des Sicherheitsgurtes zu begrenzen. Ein weiteres Einsatzgebiet für Kolben-Zylinder-Einheiten sind Cabrio-Fahrzeuge, welche mit einem ausfahrbaren Überrollbügel versehen sind. Ein solcher Überrollbügel wird mittels einer Kolben-Zylinder-Einheit ausgefahren, wenn sich das Cabrio-Fahrzeug überschlägt.

Bei aus dem Stand der Technik bekannten Kolben-Zylinder-Einheiten tritt der Kolben, wenn dieser in Richtung einer Axialrichtung der Kolben-Zylinder-Einheit aus seiner Ausgangsstellung in eine Endstellung verschoben wird, durch eine in dem Zylinder vorhandene und an dessen vorderer Stirnseite angeordnete Austrittsöffnung hindurch. In der Ausgangsstellung des Kolbens befindet sich in der Regel dessen vorderes Ende innerhalb des Zylinders und somit von der vorderen Stirnseite des Zylinders her betrachtet hinter der Austrittsöffnung, wobei auch denkbar ist, dass das vordere Ende des Kolbens in der Ausgangsstellung schon teilweise durch die Austrittsöffnung hindurch ragt. In diesem Zustand der Ausgangsstellung der Kolben-Zylinder-Einheit ist die Austrittsöffnung des Zylinders mit einer Verschlusskappe, welche vorzugsweise aus Kunststoff hergestellt ist, verschlossen. Eine solche Verschlusskappe wird üblicherweise auf das die Austrittsöffnung umfassende Ende des Zylinders gepresst.

Die Druckschrift US 2002/0074787 zeigt eine Kolben-Zylinder-Einheit, welche einen Zylinder und einen in Axialrichtung aus einer Ausgangsstellung in eine Endstellung verschiebbar in dem Zylinder gelagerten Kolben aufweist. Der Zylinder hat an einer vorderen Stirnseite eine Austrittsöffnung, wobei sich der Kolben in seiner Endstellung durch diese Austrittsöffnung erstreckt. Die Austrittsöffnung des Zylinders ist mit einer Verschlusskappe versehen, welche in der Ausgangsstellung an dem Kolben anliegt.

Es ist Aufgabe der Erfindung, eine verbesserte Kolben-Zylinder-Einheit sowie ein verbessertes fahrzeugintegrierbares Personensicherheitssystem mit einer solchen Kolben-Zylinder-Einheit anzugeben, bei der bei ihrer Aktivierung eine verbesserte, reproduzierbarere Wirkung auf die Kolben-Zylinder-Einheit umgebende nachgelagerte Baugruppen gegeben ist.

Die erfindungsgemäße Kolben-Zylinder-Einheit hat einen Zylinder und einen in einer Axialrichtung aus einer Ausgangsstellung in eine Endstellung verschiebbar in dem Zylinder gelagerten Kolben, wobei der Zylinder an einer vorderen Stirnseite eine Austrittsöffnung aufweist und sich der Kolben in seiner Endstellung durch diese Austrittsöffnung erstreckt. Die Austrittsöffnung des Zylinders ist mit einer Verschlusskappe versehen, vorzugsweise durch sie verschlossen, welche in der Ausgangsstellung an dem Kolben, vorzugsweise an einem der Austrittsöffnung des Zylinders zugewandten vorderen Endbereich des Kolbens, anliegt. Die Verschlusskappe ist so am Zylinder befestigt, dass sie durch Verschieben des Kolbens vom Zylinder lösbar ist.

Die Verschlusskappe positioniert den Kolben in Axial- und/oder Radialrichtung innerhalb des Zylinders und führt dazu, dass dieser im Zylinder nicht beispielsweise während des Betriebs des Fahrzeugs wackeln und Klappergeräusche erzeugen kann. Damit lässt sich der Kolben leicht verschieblich im Zylinder unterbringen, denn der Kolben wird in der Ausgangsstellung durch die Kappe positioniert. In Richtung zum entgegengesetzten Ende liegt der Kolben z.B. an einem Anschlag des Zylinders an. Die Verschlusskappe stellt weiterhin ein Dichtelement dar, indem sie den Innenbereich des Zylinders vor ungewünschten Umwelteinflüssen, wie z.B. Feuchtigkeit, Schmutzpartikel, gegen den Umgebungsbereich des Zylinders abdichtet.

Um Toleranzen auszugleichen sollte die Verschlusskappe in der Ausgangsstellung mit Vorspannung gegen den Kolben drücken.

Die Befestigung der Kappe am Zylinder erfolgt insbesondere indem die Kappe mit ihrer radialen Innenseite zumindest teilweise an einer Außenseite des Zylindermantels anliegt. Natürlich wäre es auch möglich, die Kappe nicht auf den Zylinder aufzustecken, sondern in den Zylinder als Verschluss einzustecken.

Die Kappe ist so am Zylinder befestigt, dass sie durch Verschieben des Kolbens vom Zylinder lösbar ist; d.h. bei Betätigen der Kolben-Zylinder-Einheit kann die Kappe zerstörungsfrei d.h. als Ganzes, von dem Zylinder durch den ausfahrenden Kolben weggestoßen werden

Die bevorzugte Ausführungsform der Erfindung sieht einen in der Einheit vorgesehenen pyrotechnischen Antrieb zur Bewegung des Kolbens vor.

Vorteilhaft kann bei der erfindungsgemäßen Kolben-Zylinder-Einheit eine definierte Lösekraft und eine definierte Position der Verschlusskappe erreicht werden, da diese gegen axiales Verschieben, insbesondere formschlüssig, an dem Zylinder befestigt sein kann, z.B. durch eine Rastverbindung. Der Formschluss erlaubt eine exakte Positionierung der Kappe relativ zum Zylinder.

Die Kombination aus Rastverbindung und Vorspannung des Kolbens sorgt dafür, dass die Kappe selbst axial nach außen gedrückt ist, so dass die Position der Kappe klar vorgegeben ist.

Selbstverständlich kann die Verschlusskappe zusätzlich auch reibschlüssig an dem Zylinder gehalten sein. Folglich kann der im Inneren des Zylinders angeordnete Kolben unter eine definierte Vorspannung gesetzt werden, wodurch ein ebenfalls definierter Kraftschluss zwischen der Verschlusskappe und dem Kolben zustande kommt. Befindet sich der Kolben in seiner Ausgangsstellung, so kann durch den Form- und/oder Kraftschluss zwischen Kolben und Verschlusskappe eine ungewünschte Bewegung des Kolbens in dem Zylinder, beispielsweise während des Betriebs eines Fahrzeugs, in das die Kolben-Zylindereinheit integriert ist, wirkungsvoll minimiert oder vermieden werden.

Gemäß einer weiteren Ausführungsform weist ein Kragen der Verschlusskappe, der in der Ausgangsstellung die Mantelfläche des Zylinders umschließt, auf seiner Innenseite einen Hinterschnitt auf, der mit einem auf der Mantelfläche des Zylinders vorhandenen Rastvorsprung formschlüssig zusammenwirkt. Gemäß einer alternativen Ausführungsform weist der Kragen der Verschlusskappe, der in der Ausgangsstellung die Mantelfläche des Zylinders umschließt, auf seiner Innenseite einen Rastvorsprung auf, welcher mit einer in die Mantelfläche des Zylinders vorgesehenen Nut formschlüssig zusammenwirkt.

Bevorzugt sind der Hinterschnitt, der Rastvorsprung und/oder die Nut radial umlaufend ausgeführt. Sind die Rastvorsprünge, der Hinterschnitt und die Nut radial umlaufend ausgeführt, so kann die Verschlusskappe in einer bezüglich der Axialrichtung beliebig gedrehten Position aufgesetzt werden. Dies stellt eine weitere Vereinfachung dar.

Das axiale Ende des Zylinders und/oder der Kragen können auch, vorzugsweise in Axialrichtung (A), geschlitzt sein, so dass sich elastische fingerförmige Abschnitte ergeben, die ein Verrasten von Verschlusskappe und der vorderen Stirnseite des Zylinders erleichtern.

Auf ein Verpressen der Verschlusskappe kann bei Vorsehen einer Rastverbindung verzichtet werden, was einen Kostenvorteil bei der Montage der Kolben-Zylinder-Einheiten darstellt. Außerdem sind der Sitz und die Position der Verschlusskappe auf dem Zylinder durch die Positionen der entsprechenden Rastvorsprünge sowie des Hinterschnitts bzw. der Nut definiert.

Vorteilhaft unterliegt der ohnehin vereinfachte Herstellungsprozess nur den durch die entsprechenden Bauteile vorgegebenen Fertigungstoleranzen. Weitere Toleranzen, wie sie beispielsweise beim Verpressen einer Verschlusskappe auftreten können, treten nicht auf.

Gemäß einer weiteren Ausführungsform umfasst die Verschlusskappe eine Stirnwand, die in der Ausgangsstellung der Austrittsöffnung gegenüberliegt und sie verschließt. Bevorzugt ist die Stirnwand quer, weiterhin bevorzugt senkrecht zu der Axialrichtung orientiert.

Die Stirnwand hat auf der der Austrittsöffnung zugewandten Innenseite wenigstens einen Vorsprung, z.B. in Form einer Wulst, der insbesondere in der Ausgangsstellung der Verschlusskappe an einem vorderen Endebereich des Kolbens in seiner Ausgangsstellung anliegt, insbesondere unter Vorspannung. Über den Vorsprung wird das vordere Ende des Kolbens in Axialrichtung und/oder Radialrichtung positioniert.

Die bevorzugte Ausführungsform sieht vor, dass der wenigstens eine Vorsprung an einer Schrägfläche am vordereren Endbereich anliegt, so dass eine Zentrierung des Kolbenendes erfolgt.

Bevorzugt ist die Kappe oder der Vorsprung elastisch oder plastisch verformbar, wobei der in aufgesetztem Zustand der Verschlusskappe vorliegende Kraftschluss zum vorderen Ende des Kolbens unter plastischer bzw. elastischer Verformung des Vorsprungs hergestellt wird. Bevorzugt ist der Vorsprung radial umlaufend und durchgehend ausgeführt, es kann jedoch, zum Beispiel um Material einzusparen, auch eine lediglich abschnittsweise ausgestaltete Wulst zum Einsatz kommen.

Gemäß einer Ausführungsform ist die Stirnwand der Verschlusskappe auf ihrer der Austrittsöffnung abgewandten Außenseite so geformt, dass diese eine zumindest abschnittsweise konvexe Außenkontur aufweist. Diese Außenkontur kann z.B. sphärisch sein. Eine solche Außenkontur kann verhindern, dass ein Benutzer der Kolben-Zylinder-Einheit diese in einer möglichen ungünstigen Position, beispielsweise die Verschlusskappe nach unten, in Richtung eines festen Untergrundes weisend, abstellt.

Das kappenseitige Ende des Zylinders ist mit einem außenseitigen Absatz versehen, auf dem außenseitig die Kappe aufgesetzt ist.

Vorteilhaft ist die Endstellung des Kolbens durch einen an dem Zylinder vorhandenen Anschlag definiert.

Die Kolben-Zylinder-Einheit kann einen pyrotechnischen Antrieb zur Bewegung des Kolbens aufweisen, wobei der pyrotechnische Antrieb vorzugsweise eine Brennkammer mit pyrotechnischen Material und/oder einen Zünder umfasst. Gemäß einem weiteren Aspekt der Erfindung wird ein fahrzeugintegrierbares Personensicherheitssystem mit einer Kolben-Zylinder-Einheit gemäß einer oder mehrerer der vorgenannten Ausführungsformen als Antriebseinheit angegeben. Vorzugsweise weist dabei das fahrzeugintegrierbare Personensicherheitssystem eine elektronische Steuereinheit auf, mittels der die Kolben-Zylinder-Einheit bei Vorliegen einer Auslösesituation aktivierbar ist. Gleiche und ähnliche Vorteile, wie sie bereits im Hinblick auf die erfindungsgemäße Kolben-Zylinder-Einheit erwähnt wurden, treffen ebenso auf das fahrzeugintegrierbare Personensicherheitssystem zu und bedürfen daher keiner weiteren Erläuterung.

Das fahrzeugintegrierbare Personensicherheitssystem kann ein Aufstellsystem für eine Motorhaube und/oder einen Überrollbügel eines Fahrzeugs aufweisen, wobei, wie bereits eingangs beschrieben, im Falle des Aufstellsystems für eine Motorhaube, die Motorhaube des Fahrzeugs um eine definierte Wegstrecke angehoben werden kann, um einen möglichen Deformationsweg der Motorhaube bei einem Aufprall eines Passanten auf die Motorhaube zu erhöhen und im Falle des Überrollbügels ein solcher Überrollbügel ausgefahren werden kann, wenn sich das Fahrzeug, vorzugsweise ein Cabrio-Fahrzeug, überschlägt.

Nachfolgend wird die Erfindung unter Bezugnahme auf die Figuren näher erläutert. Es zeigen:
FIG. 1 eine vereinfachte perspektivische Schnittansicht einer erfindungsgemäßen Kolben-Zylinder-Einheit gemäß einem Ausführungsbeispiel als Teil eines erfindungsgemäßen Personensicherheitssystems,
FIG. 2 eine vereinfachte detaillierte Schnittansicht dieser Kolben-Zylinder-Einheit im Bereich ihrer Verschlusskappe vor dem Aufsetzen der Verschlusskappe und
FIG. 3 eine weitere vereinfachte detaillierte Schnittansicht der Kolben-Zylinder-Einheit mit aufgesetzter Verschlusskappe.

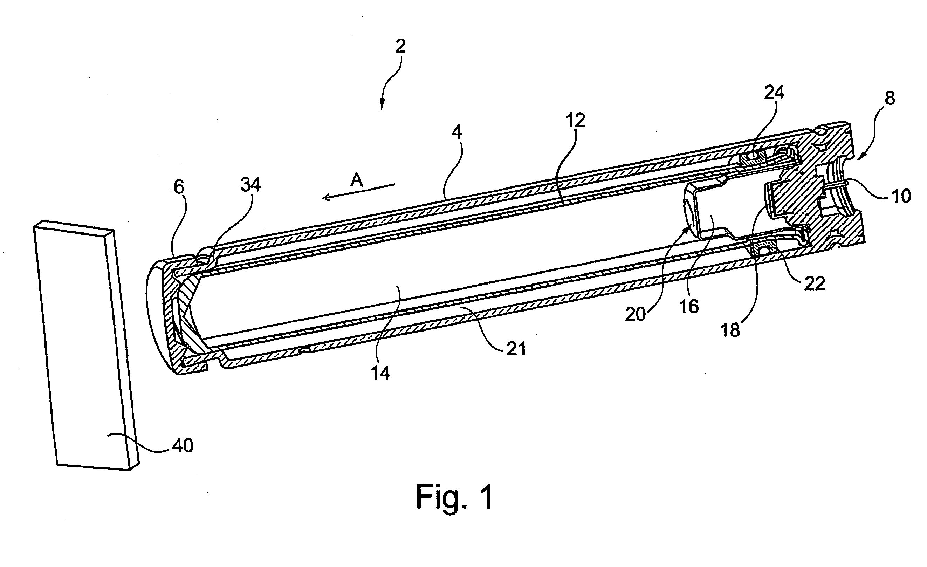

FIG. 1 zeigt ein Ausführungsbeispiel einer Kolben-Zylinder-Einheit 2 eines fahrzeugintegrierbaren Personensicherheitssystems in vereinfachter perspektivischer Schnittansicht. Die Kolben-Zylinder-Einheit 2 umfasst einen Zylinder 4, welcher an seinem vorderen Stirnende eine Austrittsöffnung aufweist, die mit einer Verschlusskappe 6 verschlossen ist.

An einem hinteren Stirnende des Zylinders 4 bzw. der Kolben-Zylinder-Einheit 2 ist eine Steckeraufnahme 8 vorgesehen, welche als Stifte ausgeführte Kontakte 10 eines Zünders 18 aufweist.

Im Innenraum des Zylinders 4 befindet sich ein beispielhaft als Hohlkolben ausgeführter Kolben 12. Der Kolben 12 ist einseitig geschlossen und umfasst in seinem Inneren eine Expansionskammer 14 zur Aufnahme von Druckgas. Der zum Ausfahren des Kolbens 12 notwendige Druck wird bei der dargestellten Kolben-Zylinder-Einheit 2 pyrotechnisch erzeugt.

Der pyrotechnische Antrieb umfasst eine Brennkammer 16, die in die Expansionskammer 14 des Kolbens 12 hineinragt. In der Brennkammer 16 befindet sich pyrotechnisches Material oder auch eine Druckgaspatrone. Das pyrotechnische Material kann mit Hilfe des Zünders 18 aktiviert werden.

Stirnseitig an der Brennkammer 16 vorhandene Sollbruchstellen 20 erlauben eine Expansion des freiwerdenden oder erzeugten Druckgases in die Expansionskammer 14 hinein, sodass der Kolben 12 in einer Axialrichtung A aus dem Zylinder 4 heraus bewegt werden kann. Bei dieser Bewegung wird die Verschlusskappe 6 von dem Kolben 12, welcher durch die Austrittsöffnung des Zylinders 4 hindurch bewegbar ist, durchbrochen bzw. komplett entfernt, insbesondere als Ganzes.

Die Expansionskammer 14 ist gegenüber einem Ringraum 21 zwischen der Innenseite des Zylinders 4 und der Außenseite des davon beabstandeten Kolbens 12 durch eine Dichtung abgedichtet, welche einen als ringförmiges Bauteil ausgebildeten Dichtungsträger 22 und einen in einer radial umlaufenden Nut dieses Dichtungsträgers 22 eingelegten O-Ring 24 umfasst. Die am zünderseitigen Ende des Kolbens 12 liegende Dichtung bewegt sich, wenn die Kolben-Zylinder-Einheit 2 aktiviert wird, gemeinsam mit dem Kolben 12 in Axialrichtung A und dichtet den brennkammerseitigen Hochdruckabschnitt im Zylinder 4 gegenüber dem Ringraum 21 ab. In der Endstellung des Kolbens 12 schlägt der Dichtungsträger 22 an den zylinderseitigen Anschlag 34 an, wobei ein im zünderseitigen Ende des Kolbens 12 vorhandener Verformungsbereich plastisch oder elastisch verformt werden kann, und die Bewegung des Zylinders 4 abzubremsen.

Der Anschlag 34 wird durch einen umlaufenden Absatz des Zylinders 4 an seinem vorderen Ende gebildet.

Bei einem fahrzeugintegrierbaren Personensicherheitssystem, z.B. einem Fußgängerschutzsystem wird durch das Ausfahren des Kolbens 12 beispielsweise eine Motorhaube 40 eines Fahrzeugs um eine definierte Strecke angehoben, sodass beim Aufschlag einer Person eine entsprechende Knautschzone durch Verformung der Motorhaube 40 zur Verfügung steht und ein Kontakt der Person mit dem darunterliegenden Motorblock verhindert bzw. abgemildert werden kann.

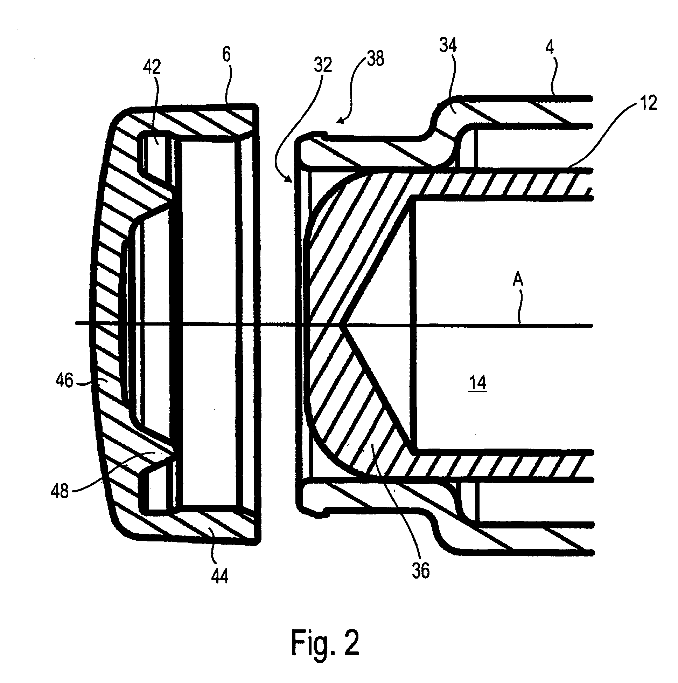

FIG. 2 zeigt eine vereinfachte detaillierte Schnittansicht der Kolben-Zylinder-Einheit 2 aus FIG. 1 im Bereich der Austrittsöffnung 32 des Zylinders 4.

Der Kolben 12 befindet sich in seiner Ausgangsstellung, in der sein vorderes Ende 36 etwas hinter der Austrittöffnung 32 zurückversetzt positioniert ist. An einem vorderen Ende der Zylinders 4 ist auf seiner äußeren Mantelfläche ein Rastvorsprung 38 vorhanden, welcher bevorzugt radial umlaufend ausgeführt ist. Allgemeiner gesagt befindet sich der Rastvorsprung 38 im Bereich der Austrittsöffnung 32.

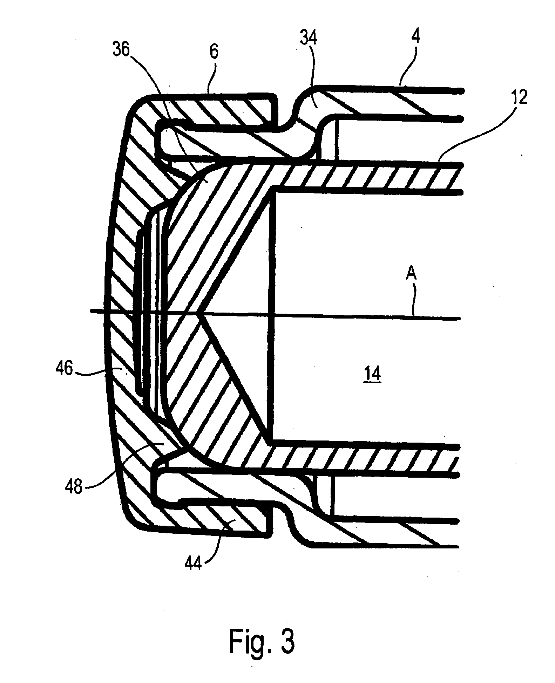

Bei montiertem Zustand der Verschlusskappe 6 (siehe Fig. 3) wirkt dieser Rastvorsprung 38 mit einem in der Verschlusskappe 6 vorhandenen Hinterschnitt 42 zusammen, um eine Rastverbindung zu erzeugen.

Die Verschlusskappe 6 umfasst eine Stirnwand 46, welche sich quer, bevorzugt im Wesentlichen senkrecht zu der Axialrichtung A erstreckt, und an die sich ein radial umlaufender Kragen 44 anschließt.

Im montierten Zustand der Verschlusskappe 6 (siehe Fig. 3) umschließt der Kragen 44 die äußere Mantelfläche des Zylinders 4, und die Stirnwand 46 verschließt die Austrittsöffnung 32. Hierbei kann der Kragen 44, vorzugsweise mittels einer Presspassung, eine dichtende Verbindung zur äußeren Mantelfläche des Zylinders 4 ausbilden.

Der Hinterschnitt 42 ist in einer Innenseite des Kragens 44 vorgesehen und befindet sich bevorzugt in einem Bereich des Kragens 44, der an die Stirnwand 46 angrenzt.

Eine der Austrittsöffnung 32 abgewandte Außenseite der Stirnwand 46 ist bevorzugt konvex, weiterhin bevorzugt sphärisch geformt. Auf diese Weise soll verhindert werden, dass ein Benutzer die Kolben-Zylinder-Einheit 2 in einer möglichen ungünstigen Position, beispielsweise die Verschlusskappe nach unten, in Richtung eines festen Untergrundes weisend, auf der Stirnwand 46 stehend abstellt.

Der an dem Zylinder 4 vorhandene Rastvorsprung 38 und der Absatz an der Verschlusskappe 6, der den Hinterschnitt 42 begrenzt, liegen im montierten Zustand der Verschlusskappe 6 formschlüssig aneinander an. Dieser Zustand ist in FIG. 3 gezeigt.

Eine der Austrittsöffnung 32 (betrachtet in montiertem Zustand der Verschlusskappe 6) zugewandte Innenseite der Verschlusskappe 6 ist mit einem Vorsprung 48 versehen. Dieser Vorsprung 48 ist bevorzugt aus einem plastisch und/oder elastisch verformbaren Material und tritt in montiertem Zustand der Verschlusskappe 6 mit dem vorderen Endbereich 36 des Kolbens 12 unter Vorspannung in Kontakt.

Über den umlaufenden Vorsprung 48 kann ausgehend von der Verschlusskappe 6 entgegen der Axialrichtung A wie auch in Radialrichtung eine Vorspannkraft in den Kolben 12 eingeleitet werden. Die Anlagefläche des Vorsprungs 48 ist eine Schrägfläche, hier eine abgerundete Kante des Kolbenendes. Mit anderen Worten wird der Kolben 12 von dem Vorsprung 48 in seiner vorgesehenen Ausgangsstellung gehalten. Ein möglicherweise zwischen der Außenseite des Kolbens 12 und der Innenseite des Zylinders 4 vorhandenes radiales Spiel kann akzeptiert werden, da der Kolben 12 über die Wulst 48 von der Verschlusskappe 6 gehalten wird. Dabei ist es vorteilhaft, dass die Verschlusskappe 6 über ihren Hinterschnitt 42 am Rastvorsprung 38 des Zylinders 4 formschlüssig gehalten ist und daher eine hohe Abzugskraft aufweist.

Gemäß einem weiteren nicht gezeigten Ausführungsbeispiel kann die Verschlusskappe 6 mit einem Rastvorsprung versehen werden, der in eine passende Nut, welche in der äußeren Mantelfläche des Zylinders 4 vorhanden ist, greift. Ein solcher Rastvorsprung wird bevorzugt einem Bereich des Endes des Kragens 44 angeordnet, welches dem Deckel 46 abgewandt ist.

Die Kappe 6 ist insbesondere aus Kunststoff.

Der Absatz am vorderen Ende des Zylinders bildet an seiner radialen Innenfläche eine Führungsfläche für das vordere Ende des Kolbens 12, der in der Ausgangsstellung im Bereich des Absatzes liegt.

## Patentansprüche

1. Kolben-Zylinder-Einheit (2) mit einem Zylinder (4) und einem in einer Axialrichtung (A) aus einer Ausgangsstellung in eine Endstellung verschiebbar in dem Zylinder (4) gelagerten Kolben (12), wobei der Zylinder (4) an einer vorderen Stirnseite eine Austrittsöffnung (32) aufweist und sich der Kolben (12) in seiner Endstellung durch diese Austrittsöffnung (32) erstreckt, wobei die Austrittsöffnung (32) des Zylinders (4) mit einer Verschlusskappe (6) versehen ist, welche in der Ausgangsstellung an dem Kolben (12) anliegt, **dadurch gekennzeichnet, dass** die Verschlusskappe (6) so am Zylinder (4) befestigt ist, dass sie durch Verschieben des Kolbens (12) vom Zylinder (4) lösbar ist.

2. Kolben-Zylinder-Einheit (2) nach Anspruch 1, **dadurch gekennzeichnet, dass** die Verschlusskappe (6) in der Ausgangsstellung mit Vorspannung gegen den Kolben (4) drückt und/oder dass die Verschlusskappe (6) das vordere Ende des Kolbens (4) axial und/oder radial positioniert.

3. Kolben-Zylinder-Einheit (2) nach Anspruch 1 oder 2, **dadurch gekennzeichnet, dass** die Verschlusskappe (6) mit ihrer radialen Innenseite zumindest teilweise an einer Außenseite des Zylindermantels anliegt.

4. Kolben-Zylinder-Einheit (2) nach zumindest einem der vorhergehenden Ansprüche, **dadurch gekennzeichnet, dass** die Verschlusskappe (6) in der Ausgangsstellung in Axialrichtung gegen axiales Verschieben, insbesondere formschlüssig, mit dem Zylinder (4) verbunden ist, insbesondere über eine Rastverbindung.

5. Kolben-Zylinder-Einheit (2) nach Anspruch 4, **dadurch gekennzeichnet, dass** ein Kragen (44) der Verschlusskappe (6) ausgebildet ist, der in der Ausgangstellung die Mantelfläche des Zylinders (4) umschließt, auf seiner Innenseite einen Hinterschnitt (42) aufweist, welcher mit einem auf der Mantelfläche des Zylinders (4) vorhandenen Rastvorsprung (38) formschlüssig zusammenwirkt oder dass ein Kragen (44) der Verschlusskappe (6), der in der Ausgangstellung die Mantelfläche des Zylinders (4) umschließt, auf seiner Innenseite einen Rastvorsprung aufweist, welcher mit einer in die Mantelfläche des Zylinders (4) vorgesehenen Nut formschlüssig zusammenwirkt.

6. Kolben-Zylinder-Einheit (2) nach Anspruch 5, **dadurch gekennzeichnet, dass** der Hinterschnitt (42), der Rastvorsprung (38) und/oder die Nut radial umlaufend ausgeführt sind oder dass der Kragen (44) und/oder das axiale Ende des Zylinders (4) geschlitzt ausgebildet sind.

7. Kolben-Zylinder-Einheit (2) nach zumindest einem der vorhergehenden Ansprüche, **dadurch gekennzeichnet, dass** die Verschlusskappe (6) eine vor der Austrittsöffnung (32) des Zylinders (4) liegende Stirnwand (46) umfasst, die auf ihrer der Austrittsöffnung (32) zugewandten Innenseite wenigstens einen Vorsprung (48) aufweist, der in der Ausgangsstellung der Verschlusskappe (6) am vorderen Endbereich (36) des Kolbens (12) anliegt, insbesondere wobei der wenigstens eine Vorsprung (48) das vordere Ende des Kolbens (12) in axialer und/oder radialer Richtung positioniert.

8. Kolben-Zylinder-Einheit (2) nach Anspruch 7, **dadurch gekennzeichnet, dass** der Vorsprung (48) elastisch oder plastisch verformbar ist und in aufgesetztem Zustand der Verschlusskappe (6) unter plastischer oder elastischer Verformung vorgespannt an dem vorderen Endbereich (36) der Kolbens (12) anliegt und/oder dass der Vorsprung (48) durchgehend umlaufend ausgeführt ist und/oder der vordere Endbereich (36) eine Schrägfläche hat, an der der Vorsprung (48) anliegt.

9. Kolben-Zylinder-Einheit (2) nach zumindest einem der vorhergehenden Ansprüche, **dadurch gekennzeichnet, dass** die Verschlusskappe (6) eine Stirnwand (46) mit einer zumindest abschnittsweise konvexen Außenkontur aufweist.

10. Kolben-Zylinder-Einheit (2) nach zumindest einem der vorhergehenden Ansprüche, **dadurch gekennzeichnet, dass** die Endstellung des Kolbens (12) durch einen an dem Zylinder (4) vorhandenen Anschlag (34) definiert ist.

11. Kolben-Zylinder-Einheit (2) nach zumindest einem der vorhergehenden Ansprüche, **dadurch gekennzeichnet, dass** sie einen pyrotechnischen Antrieb zur Bewegung des Kolbens (12) aufweist, wobei der pyrotechnische Antrieb vorzugsweise eine Brennkammer (16) mit pyrotechnischen Material und/oder einen Zünder 18 umfasst.

12. Fahrzeugintegrierbares Personensicherheitssystem mit einer Antriebseinheit in Form der Kolben-Zylinder-Einheit (2) nach zumindest einem der vorhergehenden Ansprüche, wobei das fahrzeugintegrierbare Personensicherheitssystem vorzugsweise eine elektronische Steuereinheit aufweist, mittels der die Kolben-Zylinder-Einheit (2) bei Vorliegen einer Auslösesituation aktivierbar ist.

13. Fahrzeugintegrierbares Personensicherheitssystem nach Anspruch 12, **dadurch gekennzeichnet, dass** es ein Aufstellsystem für eine Motorhaube und/oder einen Überrollbügel eines Fahrzeugs aufweist.

## Claims

1. A piston-cylinder unit (2) comprising a cylinder (4) and a piston (12) supported in the cylinder (4) to be movable in an axial direction (A) from a home position to an end position, the cylinder (4) having an outlet aperture (32) at a front end face and the piston (12) extending through said outlet aperture (32) in its end position, wherein the outlet aperture (32) of the cylinder (4) is provided with a closure cap (6) being adjacent to the piston (12) in the home position, **characterized in that** the closure cap (6) is mounted on the cylinder (4) so that it is detachable from the cylinder (4) by displacing the piston (12).

2. The piston-cylinder unit (2) according to claim 1, **characterized in that** in the home position the closure cap (6) is biased to press against the piston (12) and/or **in that** the closure cap (6) axially and/or radially positions the front end of the piston (12).

3. The piston-cylinder unit (2) according to claim 1 or 2, **characterized in that** the closure cap (6) is adjacent at least partially to an outside of the cylinder shell with its radial inside.

4. The piston-cylinder unit (2) according to at least one of the preceding claims, **characterized in that** in the home position the closure cap (6) is, especially positively, connected to the cylinder (4) in the axial direction against axial displacement, in particular by locking connection.

5. The piston-cylinder unit (2) according to claim 4, **characterized in that** a collar (44) of the closure cap (6) is formed which in the home position encloses the shell surface of the cylinder (4) and on its inside includes an undercut (42) which positively interacts with a locking projection (38) provided on the shell surface of the cylinder (4) or **in that** a collar (44) of the closure cap (6) enclosing the shell surface of the cylinder (4) in its home position includes on its inside a locking projection which positively interacts with a groove provided in the shell surface of the cylinder (4).

6. The piston-cylinder unit (2) according to claim 5, **characterized in that** the undercut (42), the locking projection (38) and/or the groove are configured to be radially circumferential or that the collar (44) and/or the axial end of the cylinder (4) has a slit design.

7. The piston-cylinder unit (2) according to at least one of the preceding claims, **characterized in that** the closure cap (6) comprises an end face (46) located ahead of the outlet aperture (32) of the cylinder (4), which end face includes on its inside facing the outlet aperture (32) at least one projection (48) which in the home position of the closure cap (6) is adjacent to the front end portion (36) of the piston (12), especially wherein the at least one projection (48) positions the front end of the piston (12) in the axial and/or radial direction.

8. The piston-cylinder unit (2) according to claim 7, **characterized in that** the projection (48) is elastically or plastically deformable and in the attached state of the closure cap (6) is adjacent to the front end portion (36) of the piston (12) being biased under plastic or elastic deformation and/or **in that** the projection (48) is configured to be continuously circumferential and/or the front end portion (36) has an inclined surface to which the projection (48) is adjacent.

9. The piston-cylinder unit (2) according to at least one of the preceding claims, **characterized in that** the closure cap (6) includes an end face (46) having an outer contour which is convex at least in portions.

10. The piston-cylinder unit (2) according to at least one of the preceding claims, **characterized in that** the end position of the piston (12) is defined by a stop (34) provided at the cylinder (4).

11. The piston-cylinder unit (2) according to at least one of the preceding claims, **characterized in that** it includes a pyrotechnic drive for moving the piston (12), the pyrotechnic drive preferably comprising a combustion chamber (16) including pyrotechnic material and/or an igniter (18).

12. A personal safety system adapted to be integrated in the vehicle comprising a drive unit in the form of the piston-cylinder unit (2) according to at least one of the preceding claims, wherein the personal safety system adapted to be integrated in the vehicle preferably includes an electronic control unit by means of which the piston-cylinder unit (2) can be activated when a release situation is given.

13. The personal safety system adapted to be integrated in the vehicle according to claim 12, **characterized in that** it comprises a prop-up system for a hood and/or a safety bar of a vehicle.

## Revendications

1. Unité piston-cylindre (2) avec un cylindre (4) et un piston (12) monté dans le cylindre (4) se déplaçant dans une direction axiale (A) depuis une position initiale à une position finale, dans lequel le cylindre (4) possède une face frontale munie d'une ouverture de sortie (32) et pour lequel le piston (12) dans sa position finale s'étend au travers de cette ouverture de sortie (32), dans lequel l'ouverture de sortie (32) du cylindre (4) est prévue avec un capuchon de fermeture (6), lequel est fixé en position initiale du piston (12), **caractérisé en ce que** le capuchon de fermeture (6) du cylindre (4) est monté de sorte qu'il peut être libéré du cylindre (4) par le déplacement du piston (12).

2. Unité piston-cylindre (2) selon la revendication 1, **caractérisé en ce que** le capuchon de fermeture (6) appuie avec une précontrainte contre le piston (4) en position initiale et/ou que le capuchon de fermeture (6) positionne axialement et/ou radialement l'extrémité avant du piston (4).

3. Unité piston-cylindre (2) selon la revendication 1 ou 2, **caractérisé en ce que** le capuchon de fermeture (6) est monté avec son côté intérieur radial au moins partiellement en butée contre une surface extérieure de l'enveloppe de cylindre.

4. Unité piston-cylindre (2) selon au moins l'une des revendications précédentes, **caractérisé en ce que** le capuchon de fermeture (6) est relié, en particulier par un assemblage de forme, avec le cylindre (4) en position initiale dans la direction axiale pour éviter un déplacement axial, en particulier par l'intermédiaire d'une liaison à encliquetage.

5. Unité piston-cylindre (2) selon la revendication 4, **caractérisé en ce qu'**un col (44) est prévu sur le capuchon de fermeture (6), lequel entoure en position initiale la surface latérale du cylindre (4), lequel possède sur sa face intérieure une contre-dépouille (42), laquelle coopère par verrouillage mécanique de forme avec une collerette de verrouillage (38) qui se trouve sur la surface extérieure du cylindre (4), ou que le col (44) du capuchon de fermeture (6), qui, en position initiale, entoure la surface extérieure du cylindre (4), qui possède sur sa face intérieure une saillie d'encliquetage, laquelle coopère par verrouillage mécanique de forme avec une rainure prévue sur la surface périphérique du cylindre (4).

6. Unité piston-cylindre (2) selon la revendication 5, **caractérisé en ce que** la contre-dépouille (42), la collerette de verrouillage (38) et/ou la rainure sont conçues radialement ou que le col (44) et/ou l'extrémité axiale du cylindre (4) da axial sont prévus fendus.

7. unité piston-cylindre (2) selon au moins l'une des revendications précédentes, **caractérisé en ce que** le capuchon de fermeture (6) comprend une paroi d'extrémité allongée (46) avant l'ouverture de sortie (32) du cylindre (4), qui possède au moins une saillie (48) sur sa face intérieure de l'ouverture de sortie (32) qui vient en butée dans la position initiale du capuchon de fermeture (6) à la partie d'extrémité avant (63) du piston (12), en particulier dans lequel au moins une saillie (48), positionne l'extrémité avant du piston (12) en direction axiale et/ou radiale.

8. Unité piston-cylindre (2) selon la revendication 7, **caractérisé en ce que** la saillie (48) est élastiquement ou plastiquement déformable, et se trouve dans un état attaché du capuchon de fermeture (6) sollicitée par déformation plastique ou élastique appuyant à l'extrémité avant (36) du piston (12) et/ou que la saillie (48) est montée sur toute sa longueur et/ou que l'extrémité avant (36) présente une surface inclinée sur laquelle porte la saillie (48).

9. Unité piston-cylindre (2) selon au moins l'une des revendications précédentes, **caractérisé en ce que** le capuchon de fermeture de fermeture (6) présente une paroi d'extrémité (46) ayant un contour extérieur au moins partiellement convexe.

10. Unité piston-cylindre (2) selon au moins l'une des revendications précédentes, **caractérisé en ce que** la position finale du piston (12) est définie par une butée mécanique (34) définie sur le cylindre (4).

11. Unité piston-cylindre (2) selon au moins l'une des revendications précédentes, **caractérisé en ce qu'**elle comprend un entraînement pyrotechnique destiné à déplacer le piston (12), l'entraînement pyrotechnique comprend de préférence une chambre de combustion (16) avec un matériau pyrotechnique et/ou un allumeur (18).

12. Système de sécurité des personnes intégrable dans un véhicule avec une unité d'entraînement sous la forme d'unité à piston-cylindre (2) selon au moins l'une des revendications précédentes, dans lequel le système de sécurité des personnes intégrable dans un véhicule comprend de préférence une unité de commande électronique, au moyen de laquelle l'unité piston-cylindre (2) peut être activée en présence d'une situation de déclenchement.

13. Système de sécurité des personnes intégrable dans un véhicule selon la revendication 12, **caractérisé en ce qu'**il comprend un système de déploiement pour un capot de moteur et/ou un arceau de sécurité d'un véhicule.
